# EUROPEAN PATENT SPECIFICATION

(11) **EP 0 749 355 B1**
(45) Date of publication and mention of the grant of the patent: **08.05.2002**
(21) Application number: 95911692.2
(22) Date of filing: 13.02.1995
(51) Int. Cl.: B01J 37/02, B01J 35/04, C04B 41/89

(54) **THERMAL STRESS RESISTANT MONOLITHIC CATALYST**
GEGEN THERMISCHER SPANNUNG BESTÄNDIGER MONOLITHISCHER KATALYSATOR
CATALYSEUR MONOLITHIQUE RESISTANT AUX CHOCS THERMIQUES

(30) Priority: 08.03.1994 US 207643
(43) Date of publication of application: 27.12.1996
(73) Proprietor: ENGELHARD CORPORATION, Iselin, New Jersey 08830-0770 (US)
(72) Inventor: DETTLING, Joseph, C., Howell, NJ 07731 (US); RABINOWITZ, Harold, Upper Montclair, NJ 07043 (US)
(74) Representative: Fisher, Adrian John
(86) International application number: US9501758
(87) International publication number: WO9524270

(56) References cited:
- EP-A- 0 625 371
- DE-A- 3 729 126
- FR-A- 2 160 905
- US-A- 4 019 969
- US-A- 4 774 217
- US-A- 4 849 275
- Kirk-Othmer, Encyclopedia of Chemical Technology, volume 9, fourth edition, John Wiley & Sons, New York, 1994,p 992

## Description

### BACKGROUND OF THE INVENTION

### 1. Field of the Invention

This invention relates to an improved monolithic ceramic carrier and related method of manufacture. More particularly, the invention relates to a method for the manufacture of a ceramic honeycomb catalyst of monolithic construction capable of enhanced resistance to thermal shocks.

### 2. Description of the Related Art

Monolithic catalytic supports are continuous, unitary structures consisting of a plurality of small parallel passages running in alignment with the longitudinal axis of the structure and separated by thin walls. Such structures have been termed honeycombs. In some instances the structure will have discontinuities extending transversely through the walls. A multitude of materials have been suggested and tested for use in monolithic support structures; e.g., alumina, alumina-silica, zirconia-alumina, zirconia-magnesia, mullite, zircon, zircon-mullite, titania, spinel, zirconia and Si₃N₄. Bodies composed of sintered cordierite (2MgO.2Al₂O₃5SiO₂) or β-spodumene solid solution (Li₂O.Al₂O₃2-8SiO₂) have seen extensive service in that utility.

Cordierite, or cordierite in combination with a compatible refractory phase, frequently mullite, has comprised the most extensively used material for substrate or support structure for automobile catalytic converters.

There can be deposited on the surface of the ceramic carrier of monolithic construction a catalyst composition comprising an active refractory metal oxide such as alumina, alumina-silica, titania or zirconia and a catalyst component made of a platinum group metal such as platinum, palladium, rhodium or ruthenium, and further incorporating, when necessary, a transition (or base) metal such as copper, nickel, cobalt or iron, or an oxide thereof, and a rare earth element such as cerium or lanthanum.

The monolithic honeycomb catalyst is extensively used with internal combustion engines such as in automobiles, for treating their exhaust gases to reduce air pollutants such as carbon monoxide, hydrocarbons and nitrogen oxides. Monolithic catalysts are also used in industrial applications for deodorizing waste gases and/or for the catalytic combustion of fuels for primary energy generation. When it is used for an automobile; the temperature of the catalysts in use can vary minute by minute during operation. The honeycomb catalyst is required to possess an ability to resist thermal shocks. In the honeycomb catalyst of monolithic construction, stress tends to develop between the ceramic honeycomb carrier and the catalyst composition deposited on the carrier because they have different thermal expansion coefficients. As the cycle of rapid temperature change often repeats, the honeycomb catalyst can eventually crack. When the cracks gradually gain in growth, they may break the catalyst into two or more pieces and jeopardize safe service of the catalyst. This is particularly likely when the honeycomb catalyst is located near the engine outlet, because the exhaust gas has a high temperature and the working temperature of the honeycomb catalyst fluctuates in a wide range. Therefore, the honeycomb catalyst should possess high resistance to thermal shock.

When the honeycomb catalyst is used in industrial applications, such as for the purpose of burning a fuel on the honeycomb catalyst to ensure complete-oxidation combustion of the fuel to use the heat as the primary energy source for a gas turbine, the honeycomb catalyst undergoes a large rise of temperature at the outset of the operation and a large fall of temperature at the termination of the operation. If the thermal shocks due to the large temperature changes break the catalyst, it is possible that some of the fragments of the broken catalyst can damage the turbine or cause other similar serious accidents. In this application, therefore, the honeycomb catalyst is likewise required to resist thermal shock.

The art has disclosed a variety of approaches to increase the resistance of monolithic ceramic catalysts to thermal shock. US Patent No. 4, 849, 275 discloses a cordierite honeycomb carrier having a controlled pore size and which is coated by activated alumina. The controlled pore size of the carrier improves the thermal shock resistance. US Patent No. 4,483,940 discloses a method of manufacturing a honeycomb carrier which comprises applying a coat of water soluble high molecular weight organic compound to the surface of the ceramic honeycomb carrier and subsequently depositing a catalyst component on the resultant coated carrier.

US Patent No. 4,532,228 is directed to the production of catalyst coated ceramic honeycomb structures where the ceramic contains microcracks. An organic material is deposited in the microcracks. A washcoat is then applied to the honeycomb structure prior to application of the catalyst. The organic material is preferably carbonized prior to application of the catalyst washcoat. The carbonized organic material is burnt out after application of the washcoat.

Canadian Patent No. 2,037,086 is directed to improved monolithic catalysts having thermal shock resistance. The ceramic monolithic support is precoated with a fusible and burnable organic filler from a dispersion in very fine particles. The support is heated beyond the melting point of the filler, and the catalyst components are subsequently applied and the filler burnt off.

Gulati, et al., Optimization of Substrate/Washcoat Interaction for Improved Catalyst Durability, SAE Technical Paper Series 910372 presented at the International Congress and Exposition, Detroit, Michigan, February 25-March 1, 1991, discloses various substrate/washcoat systems which preserve both the mechanical and thermal attributes of cordierite substrates. There is disclosed the mechanism of thermally induced stress due to temperature gradients from non-uniform flow and heat loss to the environment.

The above attempts to increase thermal shock resistance include coating the monolithic ceramic carrier with organic materials which are subsequently carbonized and/or burnt off, these methods require additional and often cumbersome steps. The use of organic materials can also lead to the degradation of the washcoat components. It would be desirable to provide the thermal shock resistant monolithic ceramic carrier without the necessity of using an organic coating.

### SUMMARY OF THE INVENTION

The present invention is directed to an article of manufacture comprising a monolithic ceramic carrier having a carrier surface. At least part of the surface is coated with a layer of an undercoat composition comprising a foamed material selected from alumina, zirconia, titania, silica and combinations thereof, with foamed alumina being preferred. In general, the foamed alumina material comprises cells having walls from 50 to 200 Ångstroms (5 to 20 nm) and a dimension of from 0.01 to 2.0 microns (µm) with the surface area of the foamed material being in the range of from 18 m²/g to 170 m²/g. The undercoat composition is substantially devoid of catalytically active components. In particular, the undercoat composition should consist essentially of the foamed material and optionally and preferably a binder. By catalytically active components it is meant to include metals or metal compounds which are catalytically active and include precious metals, base metals and rare earth metals. Preferably, the binder should be a non-chlorine containing binder. It has been found that a monolithic ceramic carrier coated with an undercoat comprising the recited foamed material results in unexpected improvements in thermal shock resistance.

Preferably, the undercoat composition comprises from 1 to 20% and more preferably 5 to 15% by weight of binder based on the weight of the foamed material plus binder. Preferred binders include sols of alumina, silica, titania and zirconia and combinations thereof. A useful and preferred binder is the sol of boehmite alumina. The monolithic ceramic carrier having a coating of the undercoat composition can further be coated with at least one catalyst coat composition layer. Such catalytic composition layer can include combinations of precious metal, base metals and/or rare earth metals and other materials having catalytic activity. It is recognized that upon application of the at least one catalyst coat composition layer certain of the catalytic components may impregnate or diffuse into the undercoat layer. The undercoat layer is considered to be substantially devoid of catalytic components even including such minor amounts of transported catalytically active materials. Notwithstanding the inclusion of these materials, the ceramic carrier of the article of the present invention has improved thermal shock resistance.

The monolithic ceramic carrier of the present invention can be made of a variety of materials with preferred materials including alumina, alumina-silica, zirconia alumina, zirconia magnesia, mullite, zircon, zircon-mullite, titania, spinel, zirconia, Si₃N₄, carbon, cordierite, or β-spodumene, with cordierite being most preferred. The thickness of the undercoat on the carrier can be determined based on the specific carrier and catalyst compositions. Typical and preferred undercoat thickness are from 10 to 250, preferably 30 to 150 and more preferably 30 to 100 micrometers. Stated another way, useful in the art, the amount of undercoating is in grams of undercoating per total cubic inch of monolithic ceramic carrier plus coatings. Preferably, there is from 0.01 to 0.75, preferably 0.05 to 0.5 and more preferably 0.05 to 0.25 grams of undercoating per cubic inch (0.61 to 45.77, preferably 3.05 to 30.51, and of total monolithic ceramic carrier plus carrier coatings.

The present invention contemplates a process comprising the steps of coating at least part of the surface of a monolithic ceramic carrier having a carrier surface with a layer of an undercoat composition as recited above. The carrier plus undercoat is preferably calcined prior to coating with a catalytic coat. The calcining can be conducted at from 300°C to 1250°C and preferably 350° to 600°C for a suitable time, preferably from 0.5 to 4.0 hours. The process can further comprises the steps of coating the calcined carrier and undercoat composition with at least one catalyst coat composition layer. The catalyst coated composition can then be calcined under the same conditions as recited for calcining the carrier containing the undercoat composition.

The article according to the present invention has been found to have excellent thermal shock resistance. The present invention includes the process of cyclically heating and cooling the article as recited above resulting in excellent resistance to thermal shock failure.

### BRIEF DESCRIPTION OF THE DRAWINGS

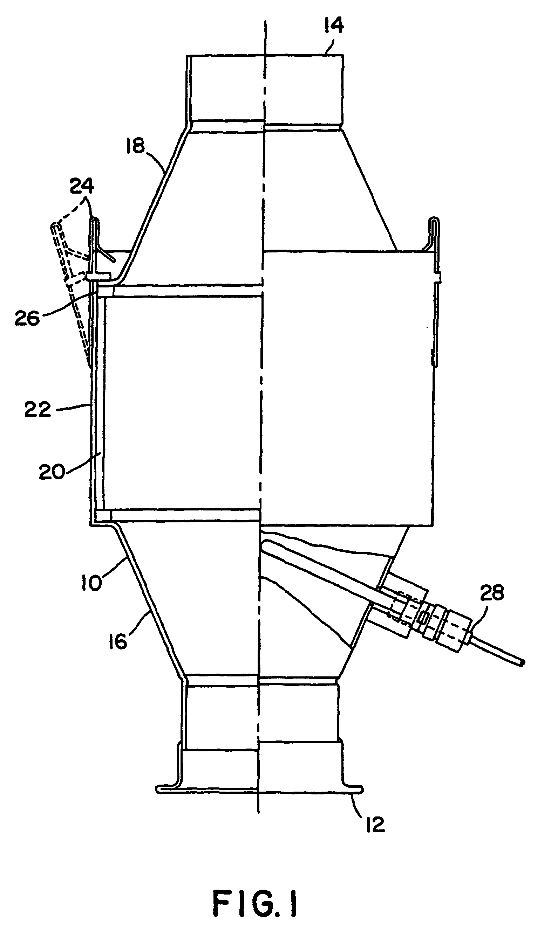

Figures 1 is a side view of an apparatus used to hold samples during testing for thermal shock resistance.

### DETAILED DESCRIPTION OF THE PREFERRED EMBODIMENTS

The present invention is directed to an article of manufacture which comprises a monolithic ceramic carrier having a carrier surface. At least part of the surface is coated with a layer of an undercoat composition comprising foamed material and being substantially devoid of catalytically active components as indicated above. Preferably, the undercoat composition further comprises a binder to promote adhesion of the foamed material particles within the undercoat layer, and adhesion of the undercoat layer to the surface of the ceramic carrier. The use of the undercoat layer has been found to result in improved resistance to thermal shock when the carrier coated with the undercoat composition is exposed to cyclical heating and cooling. In a particular and preferred embodiment, the article further comprises at least one catalyst coat composition layer located on the undercoat layer.

Any suitable monolith carrier may be employed. Preferred monolithic carriers are of the type having a plurality of fine, parallel gas flow passages extending therethrough. The latter referred to as honeycomb carriers or substrates. The carriers which are contemplated for the present invention include both flow-through and wallflow type carriers. In flow-through carriers, the passageways extend from an inlet or an outlet face of the carrier, so that the passages are open to fluid flow therethrough. In wallflow carriers alternate inlets are capped and alternate outlets are capped, typically in a checkerboard pattern at the inlet and outlet. This results in gasflow through the walls of the passageways. The passages, which are essentially straight from their fluid inlet to their fluid outlet, are defined by walls having surfaces on which the catalytic material is coated as a "washcoat" so that the gases flowing through the passages contact the catalytic material. The flow passages of the monolithic carrier are thin-walled channels which can be of any suitable cross-sectional shape and size such as trapezoidal, rectangular, square, sinusoidal, hexagonal, oval, circular. The ceramic carrier can be made of any suitable refractory material, for example, cordierite, cordierite-alpha alumina, alumina, mullite, zircon, titania, spinel, silicon nitride, zircon mullite, spodumene, alumina-silica magnesia, zircon silicate, Si₃N₄, sillimanite, magnesium silicates, zircon, petalite, alpha alumina, aluminosilicates, zirconia magnesia and zirconia-alumina. The monolith ceramic carriers useful in the present invention include those known in the art and include those recited in the Background of the Invention. The monolithic carriers may contain up to about 700 or more flow channels ("cells") per square inch of cross-section, although far fewer may be used, For example, the carrier may have from about 60 to 600, more usually from 200 to 400, cells per square inch ("cpsi") (9.3 to 93, more usually 31 to 62 cells / cm²). The wall thickness typically is in the range of from 2.0 to 12.0 mils (50.8 to 305 µm), and more typically 4.0 to 9.0 mils (101 to 229 µm).

The undercoat composition of the present invention comprises foamed material which can include foamed alumina, zirconia, titania, silica and combinations thereof with foamed alumina being most preferred. Preferably the undercoat composition further comprises a binder. The undercoat composition is substantially devoid of catalytically active components. Such components as recited above include catalytically active metals and metal compounds including precious metals, base metals and rare earth metals. By being substantially devoid it is meant that the undercoat composition can include minor amounts of naturally occurring metals and compounds derived therefrom, and those metals and derivatives which are transported into the undercoat upon applications of at least one or more layers overlayed onto the undercoat. However, substantially no catalytically active metals or metal compounds are added to the compositions. By catalytically active, it is meant those metals and derivatives which catalyze the reactions of components of gas streams contacting the catalytically active material such as oxidation of CO or hydrocarbons, or reduction of nitrogen oxides.

Useful foamed alumina is disclosed in US Patent No. 5,147,630. There is defined aluminum oxide foam particles made by a method resulting in large specific surface area and pore volume. The foamed alumina can be in the form of aluminum sulfate and aluminum oxide. Upon calcining, the foamed aluminum sulfate converts to foamed aluminum oxide. The typical calcining temperature for such conversion is disclosed to be above about 767°C. Foamed alumina particles are described which can be as small as 0.1 microns (µm) to as large as 50 (µm) microns. Aluminum oxide particles can have high specific surface area and consist of thin walls bounding hollow cells or pores. The walls can be as thin as 50 Angstroms (5 nm) but are more commonly around 100 to 200 Angstroms (10 to 20 nm). The typical dimension of the pore or cell is 0.1 microns, but may range from 0.01 to 2.0 microns. US Patent No. 5,147,630 discloses foamed products having surface areas ranging from 18 m²/g to 170 m²/g. The specific foamed alumina useful in the present invention depends on foamed alumina commercially available, and the specific carrier used in combination with the foamed alumina as well at least one catalyst coat composition layer located on the undercoat layer. Foamed zirconia and foamed titania can be made by methods corresponding to those used to make foamed alumina.

The undercoat composition preferably comprises from 0 to 20, preferably from 1 to 20 and more preferably 5 to 15 weight percent of binder based on the weight of the foamed material plus the binder. The binder acts to form an undercoat layer in which the foamed aluminum particles are bound together and further improves adherence of the undercoat layer to the monolith carrier. Useful binders include refractory inorganic binders, preferably sols of silica, alumina, titania and zirconia and combinations thereof. The binders are also useful in a colloidal form such as colloidal alumina. A preferred binder includes the sol of boehmite.

The undercoat is applied as a slurry in a suitable carrier or vehicle. Useful slurries have from 1 to 20 and more preferably from 5 to 15 weight percent of the solid material with the balance being the liquid vehicle, preferably an aqueous liquid, most preferably water.

The undercoat is applied to at least part of the surface of the monolithic ceramic carrier. The amount of foamed material in an undercoat layer on the carrier is preferably from 0.01 to 0.75, preferably from 0.05 to 0.5 and more preferably 0.05 and 0.25 grams of foamed material per cubic inch of carrier (0.61 to 45.77, preferably 3.05 to 30.51,. The undercoat layer is preferably from 10 to 250 micrometers, more preferably from 30 to 150 micrometers and most preferably 30 to 100 micrometers in thickness. The undercoat can be applied to the carrier by any suitable means known in the art. Preferably, the carrier is immersed in the slurry of undercoat composition. Alternatively, the carrier can be spray coated with the undercoat composition. Where only a portion of the carrier is to be coated, it can be partially dipped into a slurry of the undercoat composition. The carrier can then be suitably dried, preferably in air. Preferably the carrier is maintained in air at from 80°C to 150°C and more preferably 100°C to 120°C until dry. The carrier containing the undercoat composition can then be calcined at from 350°C to 1250°C, preferably in air at from about 350°C to about 600°C for a period of time from about 0.25 to 2 hours. At this point the carrier can be removed from the process for later use or sold for use to apply catalyst coat compositions.

In a preferred embodiment of the present invention, the monolithic ceramic carrier having at least part of the surface coated with a layer of an undercoat composition, preferably calcined, can further comprise at least one catalyst coat composition layer located on the undercoat layer. Useful catalyst coat compositions are well known in the art. Such compositions include diesel oxidation catalyst compositions, selective catalytic reduction catalyst compositions, three-way catalyst compositions useful in automotive applications and other industrial exhaust gas treating catalyst compositions.

The use of the article of the present invention is particularly adapted for catalyst used in mobile source applications such as on automobiles, small engine appliances, diesel driven vehicles, boats and other engines which experience variations in the temperatures of the exhaust gas passing through the catalyst. Such engines have frequent heating and cooling cycles. Temperatures can vary from room temperature to 1000°C or more and typically vary in the range of from 200°C to 700°C. Catalyst compositions adapted to treat such mobile application exhaust streams are well known in the art and can be used in one or more layers on the undercoat composition of the present invention. Such catalysts particularly when used for automotive catalysts include three-way catalysts which are known to exhibit good activity and long life. Such catalysts comprise one or more precious or platinum group metal including platinum, palladium, rhodium, ruthenium and/or iridium. These precious metals can be supported on a high surface area refractory oxide support such as a high surface area alumina. Such catalyst compositions can include base metal compounds and rare earth metal compounds. Useful base metals include compounds derived from metals selected from the group consisting of magnesium, barium, calcium, strontium, alkaline metals, boron, iron, nickel and the like. Compounds derived from rare earth metals can include compounds derived from lanthanum, cerium, praseodymium, neodymium. Useful and preferred catalyst coat compositions are disclosed in US Patent Nos. 3,993,572; 4,171,288; 4,727,052; 4,708,946; 4,714,694; 4,808,564; 4,367,162; 4,438,219; 4,476,246; 4,591,578; 4,591,580; 4,591,518; 4,591,580; 4,624,940; 4,780,447; 4,157,316; 4,294,726; 4,965,243; and 5,057,483. Preferred catalyst coat compositions used in one or more layers on the undercoat layer of the present invention are disclosed in US Serial No. 08/083,143 (see US-A-5 597 771).

Useful diesel oxidation catalysts are disclosed in US Serial Numbers 07/798,437 filed November 26, 1991 and 07/973,461 filed November 19, 1992 and 07/973,462 filed November 19, 1992 (see US A 5804155, US A 5627124 and US A 5491120). A preferred catalyst coat composition comprises a coating of bulk ceria and a bulk second metal oxide selected from alumina, titania, zirconia, ceria-zirconia, silica, alumina-silica and α-alumina. Selective catalytic reduction catalysts are disclosed in US Patent Nos. 4,053,536 and 4,164,546.

At least one catalyst coat compositions can be applied to the monolithic ceramic carrier having at least one layer of the recited undercoat composition which has preferably been calcined. A composition such as disclosed in the recited patents can be applied in the manner disclosed therein. A preferred way is to form a slurry of each of at least one catalyst coat compositions in an aqueous vehicle, preferably water. The slurry is applied preferably by dipping the monolithic carrier into the slurry. The carrier with the catalyst composition is then dried preferably in the air at from 80°C to 140°C and more preferably 100°C to 120°C. The catalyst coated carrier can then be calcined at a preferred temperature range of from 400°C to 600°C for a period of from .25 to 2 hours. As each subsequent catalyst composition coat is applied from an aqueous slurry, it can be analogously dried and calcined.

The article of manufacture comprising at least one catalyst coat layered over an undercoat composition comprising foamed material as recited above supported on a monolith ceramic substrate has been found to have improved resistance to thermal shock. The test used to evaluate thermal shock is referred to as a structural integrity to thermal shock test using a Maremont exhaust gas simulator (EGS) Model No. 3 sold by the Corning Glass Works, Corning, New York. The test procedure used in accordance with the present invention follows:

The procedure used to measure thermal shock using the Maremont exhaust gas simulator comprises mounting a monolithic ceramic carrier in a sample holder of the Maremont housing. Propane gas is supplied to the holder. There is a means to ignite the propane gas. The propane gas flow is regulated to result in a specified time/temperature cycle. The sample is mounted in a thermal shock sample holding apparatus shown in Figure 1. The apparatus comprises a housing 10 having and inlet 12 and an outlet 14. There is an inlet cone 16 and an outlet cone 18. The sample 20 is placed in shell 22 and locked between inlet cone 16 and outlet cone 18 using a suitable locking means such as locking pins 24. There are suitable sealing means such as mesh gasket 26 to prevent leakage of gases passing from the test sample toward the outlet cone 18. Suitable means can be used to measure the temperature of the gas passing through the sample such as thermocouple 28 shown to measure the temperature of gases as they leave the inlet cone and pass into the sample 20.

An automatic switch is set to a position which will cycle continuously to permit propane to pass through the monolith ceramic carrier sample. A preset number of cycles is set for twenty cycles. Each cycle consists of 210 seconds. During the heating cycle the burner is on. The cycle is controlled to achieve maximum temperature in 30 seconds. The temperature is maintained for 90 seconds. Finally, a sufficient flow of compressed air is blown through the sample to give a desired cooling temperature. The cooling cycle is 90 seconds. The unit repeats the cycle 20 times. The part is then removed for inspection. The part is inspected for cracks using a sound variance detection acoustical method and visual observation. For sound variance detection acoustical method. The sample is held with one hand and struck with a hard metal object at eight locations. A dull sound is emitted from the test sample evidences a thermal crack, even though the crack may not be visible. An acceptable sample will emit a ringing sound when struck with a hard metal object. In the specific testing procedure of the present invention five monoliths of each sample are tested.

The test is repeated on each sample in 25°C heating cycle increments to maximum temperature ranging from 650±20°C to 950±20°C. The cooling cycle temperature increases from ambient to about 150±20°C as the test progresses. Following are the incremental heating/cooling cycle with each temperature (°C) being ±20°C: (heating/cooling): 650/78, 675/82, 700/87, 725/92, 750/99, 775/105, 800/112, 825/120, 850/127, 875/133, 900/139, 925/144, and 950/149.

The unit of each sample is tested after each 20 cycles at a given temperature increment. The sample is tested as noted above based on visual inspection as well as sound variance. Optionally, the unit may also be tested for isotactic crush strength. Five parts are tested for each sample. The final result is the average temperature to failure. The Maremont unit shown in Figure 1 can be used to test a variety of size and shaped samples. Samples to be tested include cylindrical honeycomb monoliths 4 inches (10.16 cm) in diameter by 6 inches (15.24 cm) long, 4.66 inches (11.84 cm) in diameter by 6 inches (15.24 cm) long, 5.66 inches (14.38 cm) in diameter by 6 inches (15.24 cm) long. These can have 400 cells and walls 8 mils (203.2 µm) thick. The Maremont unit can also test elliptical monoliths having axis of 3.18 inches (8.08 cm) and 6.68 inches (16.97 cm) and being 6.3 inches (16 cm) long. Typically, satisfactory results are attained when the sample can withstand a maximum temperature of 710°C and have a minimum value of 575°C. The minimum value is determined by plotting a probability chart from the five data points and using the minus 3Σ intercept of the best fit line.

The present invention is illustrated by the following examples which are not intended to limit the scope of this invention.

### EXAMPLES

In each of the following examples, a honeycomb substrate made of cordierite is used as a carrier. The substrate can be a K-2 cordierite substrate obtained from the Corning Glass Works. Each sample is cylindrical having a diameter of 5.66 inches (14.38 cm) and being 6 inches (15.24 cm) long along the cylinder axis. There are 400 passageways or cells having a square cross section and directed parallel to the cylinder axis. The passageway wall thicknesses are 8 thousandths of an inch (mils) (203.2 µm) thick. Each sample can be tested for thermal shock according to the procedure recited in the above specification.

### Comparative Example 1

As a comparative example, the honeycomb monolith is coated with a layer of commercially available three-way catalyst comprising a platinum/rhodium precious metal catalyst. The sample is expected to have a failure temperature of about 675°C.

### Example 1

The honeycomb can be coated with a layer of foamed alpha alumina supplied by the Cabot Corporation, and 10 weight percent boehmite alumina sol binder at a concentration of 0.18 grams per cubic inch (10.98 g/dm³). The substrate can be dried at 110°C and can be calcined for 2 hours at 400°C. The resultant noncatalytic unit can be tested for thermal shock failure. The expected result is that the failure would be at 950°C, the highest temperature on the test.

### Example 2

A honeycomb sample can be coated with a layer of foamed alumina as recited in Example 1. The sample can then be dried and calcined as recited. At least one layer of commercially available catalyst can be coated onto the foamed alumina coating. The catalytic layer can comprise a single coat of palladium/rhodium base precious metal catalyst. The catalyst can be applied in one or two layers. Each catalytic layer can be applied and dried at about 110°C and calcined for 2 hours at 400°C. Each sample of catalyst containing foamed alumina coated cordierite honeycomb can be tested for thermal shock and is expected to have a thermal shock value of 750°C.

While exemplary embodiments of the invention have been described, the true scope of the invention is to be determined from the following claims:

## Claims

1. An article of manufacture comprising:
a monolithic ceramic carrier having a carrier surface; and
at least part of the surface coated with a layer of an undercoat composition comprising a foamed material selected from the group consisting of alumina, zirconia, titania, silica and combinations thereof, and the foamed material being substantially devoid of catalytically active components.

2. The article as recited in claim 1 wherein the foamed material comprises foamed alumina.

3. The article as recited in claim 2, wherein the foamed material comprises cells having walls from 50 to 200 Ångstroms (5 to 20 nm) and a dimension of from 0.01 to 2.0 µm with the surface area of the foamed material being in the range of from 18 m²/g to 170 m²/g

4. The article as recited in claim 1 wherein the undercoat composition further comprises a binder.

5. The article as recited in claim 2 or 3 wherein the undercoat composition further comprises from 1 to 20 weight percent of a binder based on the combined weight of the binder and the foamed alumina.

6. The article as recited in claim 4 or 5 wherein the binder comprises at least one sol selected from the group consisting of alumina, silica, titania and zirconia sols.

7. The article as recited in claim 6 wherein the binder comprises alumina.

8. The article as recited in any preceding claim wherein the monolithic ceramic carrier comprises a ceramic carrier composition having at least one material selected from the group consisting of cordierite, spodumene, alumina, alumina-silica, zirconia-alumina, zirconia magnesia, mullite, zircon, zircon-mullite, titania, zirconia, spinel and Si₃N₄.

9. The article as recited in any preceding claim wherein the carrier comprises a plurality of parallel passageways, with each passageway defined by passageway walls.

10. The article as recited in any preceding claim wherein there is from 0.01 to 0.75 grams of undercoat composition per cubic inch of carrier (0.61 to 45.77 g/dm³).

11. The article as recited in any preceding claim further comprising at least one catalyst coat composition layer located on the undercoat layer.

12. The article as recited in claim 11 wherein the catalyst coat composition layer comprises a three way catalyst composition.

13. The article as recited in claim 11 or 12 wherein the catalyst coat composition comprises at least one platinum group metal.

14. A process comprising the steps of:
coating at least part of the surface of a monolithic ceramic carrier having a carrier surface with a layer of an undercoat composition comprising a foamed material selected from the group consisting of alumina, zirconia, titania, silica and combinations thereof and being substantially devoid of catalytically active components; and
calcining the carrier coated with the undercoat composition layer.

15. The process of claim 14 wherein the foamed material comprises foamed alumina.

16. The process of claim 15 wherein the foamed material comprises cells having walls from 50 to 200 Ångstroms (5 to 20 nm) and a dimension of from 0.01 to 2.0 µm with the surface area of the foamed material being in the range of from 18 m²/g to 170 m²/g

17. The process of any of claims 14 to 16 further comprising the step of coating the calcined carrier with at least one catalyst coat composition layer located on the undercoat layer.

18. The process of claim 17 further comprising the step of calcining the carrier coated with the catalyst coat composition layer.

19. The process of any of claims 14 to 18 wherein the coating of the carrier with the undercoat further comprises the step of immersing the carrier into an aqueous slurry of from 1 to 20 weight percent foamed alumina.

20. The process of claim 19 wherein the aqueous slurry is from 5 to 15 weight percent foamed alumina.

21. A process comprising the steps of:
cyclicly heating and cooling an article of manufacture comprising:
a monolithic ceramic carrier having a carrier surface; and
at least part of the surface coated with a layer of an undercoat composition comprising a foamed material selected from the group consisting of alumina, zirconia, titania, silica and combinations thereof and being substantially devoid of catalytically active components.

22. The process of claim 21 wherein the foamed material comprises foamed alumina.

23. The process of claim 22 wherein the foamed material comprises cells having walls from 50 to 200 Ångstroms (5 to 20 nm) and a dimension of from 0.01 to 2.0 µm with the surface area of the foamed material being in the range of from 18 m²/g to 170 m²/g

24. The process as recited in any of claims 21 to 23 wherein the article further comprises at least one catalyst coat composition layer located on the undercoat layer.

## Patentansprüche

1. Erzeugnis, das umfasst:
einen monolithischen keramischen Träger, der eine Trägerfläche aufweist; und
wenigstens einen Teil der Fläche, der mit einer Schicht einer Unterschichtzusammensetzung überzogen ist, die ein verschäumtes Material umfasst, das aus der Gruppe ausgewählt wird, die aus Aluminiumoxid, Zirkonoxid, Titanoxid, Siliziumoxid und Kombinationen daraus besteht, und wobei das verschäumte Material im Wesentlichen frei von katalytisch aktiven Komponenten ist.

2. Erzeugnis nach Anspruch 1, wobei das verschäumte Material verschäumtes Aluminiumoxid umfasst.

3. Gegenstand nach Anspruch 2, wobei das verschäumte Material Zellen umfasst, die Wände zwischen 50 und 200 Ångström (5 bis 20 nm) und eine Abmessung zwischen 0,01 und 2,0 µm haben, und wobei die spezifische Oberfläche des verschäumten Materials im Bereich zwischen 18 m²/g und 170 m²/g liegt.

4. Erzeugnis nach Anspruch 1, wobei die Unterschichtzusammensetzung des Weiteren ein Bindemittel umfasst.

5. Erzeugnis nach Anspruch 2 oder 3, wobei die Unterschichtzusammensetzung des Weiteren, auf Basis des kombinierten Gewichtes des Bindemittels und des verschäumten Aluminiumoxids, 1 bis 20 Gew.-% eines Bindemittels umfasst.

6. Erzeugnis nach Anspruch 4 oder 5, wobei das Bindemittel wenigstens ein Sol umfasst, das aus der Gruppe ausgewählt wird, die aus Aluminiumoxid-, Siliziumoxid-, Titanoxid- und Zirkonoxidsolen besteht.

7. Erzeugnis nach Anspruch 6, wobei das Bindemittel Aluminiumoxid umfasst.

8. Erzeugnis nach einem der vorangehenden Ansprüche, wobei der monolithische keramische Träger eine keramische Trägerzusammensetzung umfasst, die wenigstens ein Material aufweist, das aus der Gruppe ausgewählt wird, die aus Cordierit, Spodumen, Alumiumoxid, Aluminiumoxid-Siliziumoxid, Zirkoniumoxid-Aluminiumoxid, Zirkoniumoxid-Magnesiumoxid, Mullit, Zirkon, Zirkon-Mullit, Titanoxid, Zirkoniumoxid, Spinel und Si₃N₄ besteht.

9. Erzeugnis nach einem der vorangehenden Ansprüche, wobei der Träger eine Vielzahl paralleler Durchlasse umfasst und jeder Durchlass durch Durchlasswände gebildet wird.

10. Erzeugnis nach einem der vorangehenden Ansprüche, wobei zwischen 0,01 und 0,75 g Unterschichtzusammensetzung pro Kubik-Inch Träger (0,61 bis 45,77 g/dm³) vorhanden ist.

11. Erzeugnis nach einem der vorangehenden Ansprüche, das des Weiteren wenigstens eine Katalysatorüberzugzusammensetzungs-Schicht umfasst, die sich auf der Unterschicht befindet.

12. Erzeugnis nach Anspruch 11, wobei die Katalysatorüberzugszusammensetzungs-Schicht eine Dreiwegekatalysatorzusammensetzung umfasst.

13. Erzeugnis nach Anspruch 11 oder 12, wobei die Katalysatorüberzugzusammensetzung wenigstens ein Platingruppenmetall umfasst.

14. Verfahren, das die folgenden Schritte umfasst:
Überziehen wenigstens eines Teils der Oberfläche eines monolithischen Keramikträgers, der eine Trägerfläche aufweist, mit einer Schicht aus einer Unterschichtzusammensetzung, die ein verschäumtes Material umfasst, das aus der Gruppe ausgewählt wird, die aus Aluminiumoxid, Zirkonoxid, Titanoxid, Siliziumoxid und
Kombinationen daraus besteht und das im Wesentlichen frei von katalytisch aktiven Komponenten ist; und
Kalzinieren des mit der Unterschichtbeschichtungsschicht überzogenen Trägers.

15. Verfahren nach Anspruch 14, wobei das verschäumte Material verschäumtes Aluminiumoxid umfasst.

16. Verfahren nach Anspruch 15, wobei das verschäumte Material Zellen umfasst, die Wände zwischen 50 und 200 Ångström (5 bis 20 nm) und eine Abmessung zwischen 0,01 und 2,0 µm haben, und wobei die spezifische Oberfläche des verschäumten Materials im Bereich zwischen 18 m²/g und 170 m²/g liegt.

17. Verfahren nach einem der Ansprüche 14 bis 16, das des Weiteren den Schritt des Überziehens des kalzinierten Trägers mit wenigstens einer Katalysatorüberzugzusammensetzungs-Schicht umfasst, die sich auf der Unterschichtschicht befindet.

18. Verfahren nach Anspruch 17, das des Weiteren den Schritt des Kalzinierens des mit der Katalysatorüberzugzusammensetzungs-Schicht überzogenen Trägers umfasst.

19. Verfahren nach einem der Ansprüche 14 bis 18, wobei das Überziehen des Trägers mit der Unterschicht des Weiteren den Schritt des Eintauchens des Trägers in eine wässrige Aufschlämmung mit 1 bis 20 Gew.-% verschäumtem Aluminiumoxid umfasst.

20. Verfahren nach Anspruch 19, wobei die wässrige Aufschlämmung zwischen 5 und 15 Gew.-% verschäumtes Aluminiumoxid enthält.

21. Verfahren, das die folgenden Schritte umfasst:
zyklisches Erhitzen und Abkühlen eines Erzeugnisses, das umfasst:
einen monolithischen Keramikträger, der eine Trägerfläche aufweist; und
wenigstens einen Teil der Fläche, der mit einer Schicht aus einer Unterschichtzusammensetzung überzogen ist, die ein verschäumtes Material umfasst, das aus der Gruppe ausgewählt wird, die aus Aluminiumoxid, Zirkonoxid, Titanoxid, Siliziumoxid und Kombinationen daraus besteht und das im Wesentlichen frei von katalytisch aktiven Komponenten ist.

22. Verfahren nach Anspruch 21, wobei das verschäumte Material verschäumtes Aluminiumoxid umfasst.

23. Verfahren nach Anspruch 22, wobei das verschäumte Material Zellen mit Wänden umfasst, die zwischen 50 und 200 Ångström (5 bis 20 nm) und eine Abmessung zwischen 0,01 und 2,0 µm haben, und wobei die spezifische Oberfläche des verschäumten Material im Bereich zwischen 18 m²/g und 170 m²/g liegt.

24. Verfahren nach einem der Ansprüche 21 bis 23, wobei das Erzeugnis des Weiteren wenigstens eine Katalysatorüberzugzusammensetzungs-Schicht umfasst, die sich auf der Unterschichtschicht befindet.

## Revendications

1. Article de fabrication comprenant :
- un support céramique monolithique ayant une surface support ; et
- au moins une partie de la surface revêtue avec une couche d'une composition d'apprêt comprenant une matière expansée choisie dans le groupe formé par l'alumine, la zircone, l'oxyde de titane, la silice et leurs combinaisons, et la matière expansée étant sensiblement dépourvue de composants catalytiquement actifs.

2. Article selon la revendication 1, dans lequel la matière expansée comprend de l'alumine expansée.

3. Article selon la revendication 2, dans lequel la matière expansée comprend des cellules ayant des parois de 50 à 200 Angstroems (5 à 20 nm) et une dimension de 0,01 à 2,0 µm, la surface spécifique de la matière expansée étant dans la gamme de 18 m²/g à 170 m²/g.

4. Article selon la revendication 1, dans lequel la composition d'apprêt comprend de plus un liant.

5. Article selon la revendication 2 ou 3, dans lequel la composition d'apprêt comprend de plus de 1 à 20 pourcent en poids d'un liant par rapport au poids combiné du liant et de l'alumine expansée.

6. Article selon la revendication 4 ou 5, dans lequel le liant comprend au moins un sol choisi dans le groupe formé par les sols d'alumine, de silice, d'oxyde de titane et de zircone.

7. Article selon la revendication 6, dans lequel le liant comprend l'alumine.

8. Article selon l'une quelconque des revendications précédentes, dans lequel le support céramique monolithique comprend une composition de support céramique ayant au moins une matière choisie dans le groupe formé par la cordiérite, le spodumène, l'alumine, l'alumine-silice, la zircone-alumine, la zircone-magnésie, la mullite, le zircon, le zircon-mullite, l'oxyde de titane, la zircone, la spinelle et Si₃N₄.

9. Article selon l'une quelconque des revendications précédentes, dans lequel le support comprend une pluralité de passages parallèles, chaque passage étant défini par des parois de passage.

10. Article selon l'une quelconque des revendications précédentes, dans lequel il y a 0,01 à 0,75 grammes de composition d'apprêt par pouce cube de support (0,61 à 45,77 g/dm³.

11. Article selon l'une quelconque des revendications précédentes, comprenant de plus au moins une couche de composition de revêtement catalytique située sur la couche d'apprêt.

12. Article selon la revendication 11, dans lequel la couche de composition de revêtement catalytique comprend une composition catalytique trifonctionnelle.

13. Article selon la revendication 11 ou 12, dans lequel la composition de revêtement catalytique comprend au moins un métal du groupe du platine.

14. Procédé comprenant les étapes consistant à :
- revêtir au moins une partie de la surface d'un support céramique monolithique ayant une surface support avec une couche d'une composition d'apprêt comprenant une matière expansée choisie dans le groupe formé par l'alumine, la zircone, l'oxyde de titane, la silice et leurs combinaisons et étant sensiblement dépourvue de composants catalytiquement actifs ; et
- calciner le support revêtu de la couche de composition d'apprêt.

15. Procédé selon la revendication 14, dans lequel la matière expansée comprend une alumine expansée.

16. Procédé selon la revendication 15, dans lequel la matière expansée comprend des cellules ayant des parois de 50 à 200 Angstroems (5 à 20 nm) et une dimension de 0,01 à 2,0 µm, la surface spécifique de la matière expansée étant dans la gamme de 18 m²/g à 170 m²/g.

17. Procédé selon l'une quelconque des revendications 14 à 16, comprenant de plus l'étape consistant à revêtir le support calciné d'au moins une couche de composition de revêtement catalytique située sur la couche d'apprêt.

18. Procédé selon la revendication 17, comprenant de plus l'étape consistant à calciner le support revêtu de la couche de composition de revêtement catalytique.

19. Procédé selon l'une quelconque des revendications 14 à 18, dans lequel le revêtement du support avec l'apprêt comprend de plus l'étape consistant à immerger le support dans une suspension aqueuse de 1 à 20 pourcent en poids d'alumine expansée.

20. Procédé selon la revendication 19, dans lequel la suspension aqueuse est constituée de 5 à 15 pourcent en poids d'alumine expansée.

21. Procédé comprenant les étapes consistant à :
- chauffer et refroidir de façon cyclique un article de fabrication comprenant :
- un support céramique monolithique ayant une surface support ; et
- au moins une partie de la surface revêtue d'une couche d'une composition d'apprêt comprenant une matière expansée choisie dans le groupe formé par l'alumine, la zircone, l'oxyde de titane, la silice et leurs combinaisons et étant sensiblement dépourvue de composants catalytiquement actifs.

22. Procédé selon la revendication 21, dans lequel la matière expansée comprend de l'alumine expansée.

23. Procédé selon la revendication 22, dans lequel la matière expansée comprend des cellules ayant des parois de 50 à 200 Angstroems (5 à 20 nm) et une dimension de 0,01 à 2,0 µm, la surface spécifique de la matière expansée étant dans la gamme de 18 m²/g à 170 m²/g.

24. Procédé selon l'une quelconque des revendications 21 à 23, dans lequel l'article comprend de plus au moins une couche de composition de revêtement catalytique située sur la couche d'apprêt.
